# EUROPEAN PATENT SPECIFICATION

(11) **EP 3 452 666 B1**
(45) Date of publication and mention of the grant of the patent: **28.10.2020**
(21) Application number: 17715973.8
(22) Date of filing: 28.03.2017
(51) Int. Cl.: E03D 5/02, E03D 5/10, F16K 31/122, F16K 21/12

(54) **ACTUATOR FOR FLUSH VALVE**
BETÄTIGUNG FÜR SPÜLVENTIL
ACTIONNEUR POUR VANNE DE CHASSE D'EAU

(30) Priority: 02.06.2016 GB 201609691
(43) Date of publication of application: 13.03.2019
(73) Proprietor: Kohler Mira Limited, Cheltenham, Gloucestershire GL52 5EP (GB)
(72) Inventor: SMITH, Steven, Cheltenham Gloucestershire GL52 5EP (GB)
(74) Representative: Barker Brettell LLP
(86) International application number: PCT/GB2017/050867
(87) International publication number: WO 2017/207956

(56) References cited:
- EP-A1- 0 109 467
- EP-A1- 1 749 941
- DE-C- 225 014

## Description

The present invention relates to an actuator for a flush valve. In particular, but not exclusively, the present invention relates to an actuator for a flush valve of a toilet cistern.

Typically, toilets (water closets, WCs) include a tank or cistern that holds water for flushing a toilet bowl. The bowl is flushed by opening a flush valve, so that contents of the cistern or tank empty into the bowl. The flush valve is then closed, to allow the cistern or tank to refill.

DE 225 014 C discloses a lavatory flush system that provides for the remote control of an outlet valve of a cistern by means of a branch of a pressurized water line remote from the cistern. A valve for introducing an opening acting pressure change is mounted in front of the outlet.

EP 0 109 467 A discloses a tap with semi-automatic operation allowing delivery of a predetermined quantity of a fluid under pressure, more particularly a water flushing tap for example for installation in a toilet cistern.

EP 1 749 941 discloses a hydraulic actuator that has an exhaust valve which opens in the maximum stroke position by means of an actuating unit that is connected with the piston while moving the piston through a maximum stroke area of the lifting engaging into the maximal lifting position. The supply of the fluid is controlled in the cylinder volumes by an inlet valve.

According to a first aspect of the invention, there is provided an actuator for a flush valve, the actuator including: a housing defining a chamber; a piston having a head received in the chamber and a connecting rod extending from the piston head, the piston head arranged to move within the chamber, between a first position and a second position, and the connecting rod configured to actuate a flush mechanism of the flush valve as the piston head moves between the first position and the second position; an inlet for providing water under pressure into the chamber to a first side of the piston head; an outlet from the chamber from a second side of the piston head, opposite the first side; and a valve for opening and closing the outlet, wherein opening and closing the valve alters the pressure applied to the second side of the piston head, such that, in use, the piston head moves when the valve is opened or closed, wherein the valve is a solenoid valve.

The connecting rod may be configured to open the flush valve when the piston is at and/or moving to the second position.

When the piston is in the first position, the piston head may be at or near a first end of the chamber, and when the piston is in the second position, the piston head may be at or near a second end of the chamber. The inlet may be arranged at or near the first end, and the outlet may be arranged at or near the second end.

The actuator may be configured such that the first side of the piston head may be under substantially the same pressure when the valve is open and when the valve is closed.

The chamber may include a seat for the piston head, such that, in use, there is a volume of water on the first side of the piston head when the piston is in both the first position and the second position.

In use, when the valve is open, the force acting on the piston head towards the first position may be a first force, lower than the force acting on the piston head towards the second position, resulting in the piston moving to or being held at the second position.

In use, when the valve is closed, the force acting on the second side of the piston head may be a second force, higher than the force acting on the piston head towards the second position, resulting in the piston head moving to or being held at the first position.

The actuator may include means for feeding water from the first side of the piston head to second side of the piston head.

Opening the valve may cause water to drain from the second side of the piston head. The outlet may be arranged to drain water from the second side of the piston head faster than water is provided by the water feeding means.

The water feeding means may comprise passages in the piston head.

The piston head may be resiliently biased to the first position. The piston head may be urged to the first position by water pressure on the second side of the piston head, and the resilient biasing, and the piston head may be urged to the second position by the water pressure on the first side of the piston head.

The pressure on the second side of the piston head may be lower when the valve is open than when the valve is closed, such that, in use, when the valve is open, the pressure on the first side may overcome the resilient biasing and downward force on the second side of the piston head, such that the piston moves to the second position.

Closing the valve may equalise the pressure on either side of the piston head, such that the resilient biasing causes an overall force on the piston towards the first position.

The actuator may include a spring arranged to resiliently bias the piston to the first position.

The spring may be arranged around the connecting rod.

The spring may rest against a seat formed in the housing, and may be provided inside or outside the chamber.

The connecting rod may extend from the piston head, through the housing and outside the chamber.

The chamber may be cylindrical. The piston head may be arranged to move along the length of the cylinder, and form a tight fit to the circumference of the cylinder.

The outlet may be open to atmosphere.

The actuator may include a second outlet from the chamber, arranged to provide water under pressure from the first side of the piston head.

The second outlet may be connectable to a fill valve of a cistern or tank of a toilet.

The inlet may be connectable to an inlet of the cistern or tank.

The valve may be operated by a push button.

The actuator may be arranged to be installed in a cistern or tank of a toilet.

The actuator may comprise electric means for operating the valve, the electric means including a control, and a connection between the control and the valve. At least part of the connection may be received in the cistern or tank, and may be arranged to be waterproof.

The present invention will now be described, by way of example only, with reference to the accompanying drawings, in which:
**Figure 1A** shows a cut-through side view of an actuator according to an embodiment of the invention, with the solenoid valve closed;
**Figure 1B** shows a cut-through front view of the actuator of Figure 1A, with the solenoid valve closed;
**Figure 2A** shows cut-through side view of the actuator of Figure 1A, showing the water flow through the actuator with the solenoid valve closed;
**Figure 2B** shows cut-through front view of the actuator of Figure 1A, showing the water flow through the actuator with the solenoid valve closed;
**Figure 3A** shows a cut-through side view of the actuator of Figure 1A, with the solenoid valve open;
**Figure 3B** shows a cut-through front view of the actuator of Figure 1A, with the solenoid valve open;
**Figure 4A** shows cut-through side view of the actuator of Figure 1A, showing the water flow through the actuator with the solenoid valve open;
**Figure 4B** shows cut-through front view of the actuator of Figure 1A, showing the water flow through the actuator with the solenoid valve open; and

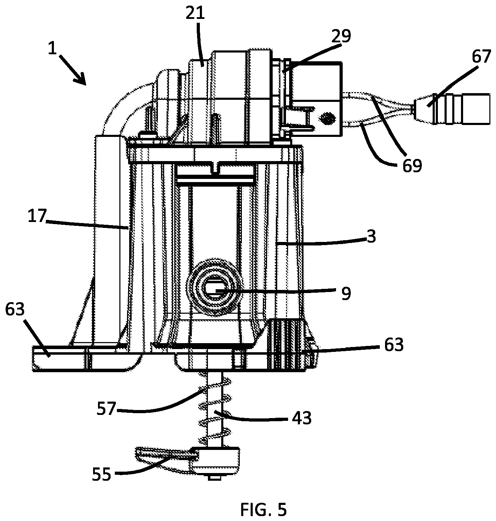

**Figure 5** shows an exterior side view of the actuator of Figure 1A.

The Figures show an example of an actuator 1 for operating a flush valve of a toilet (not shown). The actuator 1 has a housing 3, which defines a cylindrical chamber 5. The chamber 5 has a base 13, a cylindrical side wall 11 extending from the base 13, and a top wall 15.

The base 13 and sidewall 11 are formed of a unitary piece 19, which is fitted into a cavity in an outer housing piece 17. The top wall 15 is formed by a separate cap 21. The unitary piece 19 may be fitted into the cavity, and the cap 21 then secured to the outer housing 17 by screws or bolts (not shown), creating a tight fit between the cap 21, outer housing 17 and unitary piece 19.

An inlet 7 is provided at the bottom of the side wall 11 of the chamber 5, through which water is provided into the chamber 5. An outlet 9, through which water leaves the chamber 5, is also provided at the base of side wall 11. The outlet 9 is on the opposite side of the chamber 5 to the inlet 7. The inlet 7 and outlet 9 are formed in the unitary piece 19, and extend through the outer housing 17. The outlet 9 is not the outlet (without a reference sign) according to claim 1.

Referring to an outlet according to claim 1, the top wall 15 includes a number of openings 23, that open into a fluid passage 25 defined in the cap 21. The fluid passage 25 extends down the sidewall 11 of the housing, to a second outlet 27. The second outlet 27 is open to atmospheric pressure.

A solenoid valve 29 is provided to open and close the connection 31 between the openings 23 and the fluid passage 25. The solenoid valve 29 is operable so that when the valve 29 is open, water can flow from the openings 23 to the fluid passage 25, and when the valve 29 is closed, water is blocked from flowing through the fluid passage 25. The solenoid valve 29 is provided through an aperture 33 formed in the top cap 21, and is fitted into place by using inter-engaging screw threads 35.

The solenoid valve 29 is operated by providing a current to an electromagnet (not shown). Cables 69 for providing the current extend from the valve 29, into a plug 67. The plug 67 can connect to a control (not shown) for operating the valve 29, or a corresponding plug extending from the control. The cables 69, and their connections to the valve 29 are watertight. Similarly, when the plug 67 is connected to the control (or the corresponding plug) a water tight connection is also formed.

The solenoid valve 29 may be operated by any suitable control. In some cases, it may be a push button, a lever, or a switch. In some examples, the control may be remote from the toilet tank or cistern. In these cases, the solenoid valve plug 67 may be connected to a receiver, and the control connected to a transmitter. Any suitable wireless communication may be used to actuate the valve 29. In other examples, the control may be based on a sensor that detects a condition when the toilet should be flushed and sends a control signal. For example the control may be based on an elapsed time, or one or more detectors that senses the presence of a user.

The solenoid valve 29 is held open while there is a signal from the control. In some examples, the control may send a fixed length single when it is actuated (for example when a button is pressed, or pressed and released). In other examples, the control may send a signal whilst the control is actuated (for example while a button is held down) and end the signal a fixed duration after actuation of the control stops (the button is released).

Within the chamber 5, a piston 37 is provided. The piston 37 includes a piston head 39 formed of a disc, and a rod 43 extending from the bottom of the piston head 39.

The piston head 39 forms a water tight seal with the side wall 11 of the cylinder 5, to stop water passing between the piston head 39 and the side wall 11. Sealing means 41, such as a rubber O-ring are provided to make this seal. However, through holes 45 are provided in the piston head 39, so that water can pass from below the piston head 39 to above it. The size of the through holes 45 is chosen so that when the solenoid valve 29 is open, the flow of water passing through the fluid passage 25 is greater than the flow of water through the piston head 39.

A first end of the rod 43 is connected to the piston head 39. The opposite end of the rod 39 is connected to an arm 55. The rod 43 extends through the bottom of the housing 3, so the arm 55 is outside the chamber 5. A water tight seal is formed around the region where the rod 43 passes through the housing 11, so no water leaks where the rod 43 passes through the housing 3.

A spring 57 is mounted around the rod, between a first spring seat 59 formed in a recess in the arm 55, and a second spring seat 61 formed in the housing 3.

As will be discussed below in more detail, the piston head 39 can move up and down the chamber 5. As the piston head 39 moves, the rod 43 also moves. The arm 55 is shaped to be able to engage with and open a flush valve of a toilet as it moves.

The bottom of the chamber 5 includes a seat 47 for the piston head 39. The seat 47 is formed of a raised portion in the centre of the chamber 5. The seat 47 ensures that the piston head 39 never reaches the bottom of the chamber 5, so there is always water pressure from the water from the inlet 7 on the underside of the piston head 39. The rod 43 passes through the raised portion forming the seat 47.

The underside of the base 13 of the chamber 5 includes a recess where the seat 47 projects into the chamber. The second spring seat 61 is fitted into the recess, and held in place by inter-engaging screw threads 53.

When the piston head 39 is resting on the seat 47, the spring 57 is at its rest position, or slightly compressed. As the piston head 39 moves up the chamber 5, the spring 57 is compressed by the movement of the arm 55. Therefore, in the absence of any water pressure, the piston head 39 is resiliently biased to the bottom of the chamber 5, with the arm fully extended from the housing.

When the piston head 39 is at the very top of the camber, a tight fit is formed, with no space above the piston head 39. The rod 43 is connected to the piston head 39 through a screw connection 49, which projects above the top of the piston head 39. To ensure that the tight fit is formed, the cap 21 includes a recess 51 for receiving this screw connection.

At this position, the arm 55 is fully retracted.

The housing 3 includes downward facing projections 63 that define a cavity 65. When the arm 55 is fully retracted, it is housed within the cavity 65.

In use, the inlet 7 of the actuator 1 is coupled to an inlet (not shown) of a toilet tank or cistern (not shown), so the water is provided under high pressure. The outlet 9 of the actuator is coupled to a fill valve (not shown) of the toilet tank or cistern. Any sort of fill valve may be used, for example it may be a float valve. The inlet 7 and outlet 9 may include screw threads to enable this connection.

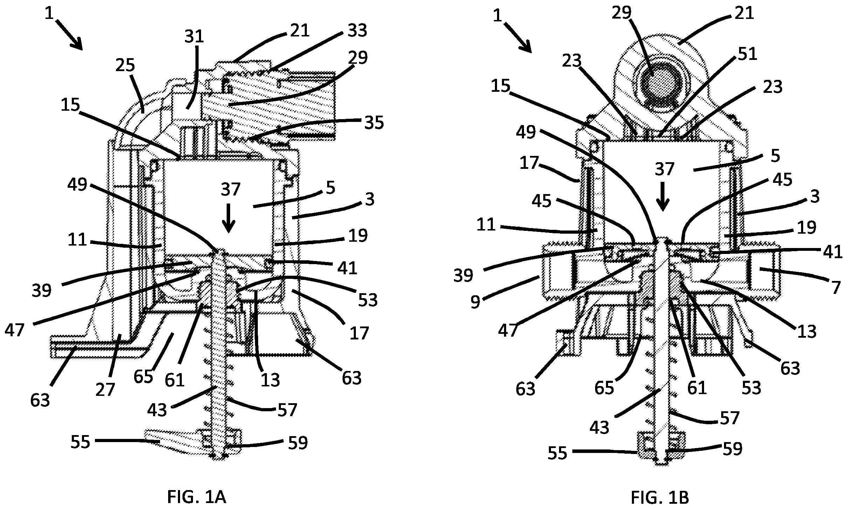

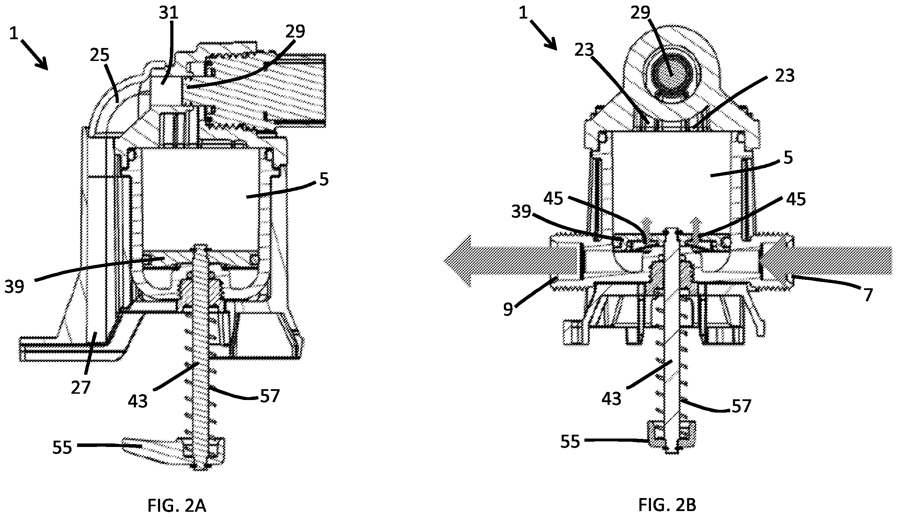

Figures 1A, 1B, 2A and 2B show the operation of the actuator 1 with the solenoid valve 29 closed, and the piston head 39 at its lowest positon in the chamber 5. Figures 2A and 2B show the flow of water through the actuator 1, by the shaded arrows.

Water enters the chamber through the inlet 7, and leaves through the outlet 9. Some of the water passes through the through-holes 45 in the piston head 39. Since the fluid passage 25 through the cap 21 is closed, the water above the piston head 39 is at the same pressure as the water below the piston head 39, but there is a net force on the piston head 39 due to the spring 57. When the piston head 39 is resting on its seat 47, then the net force keeps the piston head 39 in position, with the arm 55 fully extended.

When the solenoid valve 29 is opened, the water above the piston head 39 exits the chamber 5 through the fluid passage 25. The second outlet 27, at the end of the fluid passage 25, provides the water into the cistern or tank.

As discussed above, the flow rate that can be achieved through the fluid passage is greater than the flow rate through the through holes 45 in the piston head 39. Therefore, the pressure in the area above the piston head 39 is reduced, reducing the force pushing down on the top of the piston head 39. The combined force of the spring 57 and the water on the top of the piston head 39 is less than the force from the pressure of the water underneath the piston head 39, meaning there is a net force pushing the piston head 39 up.

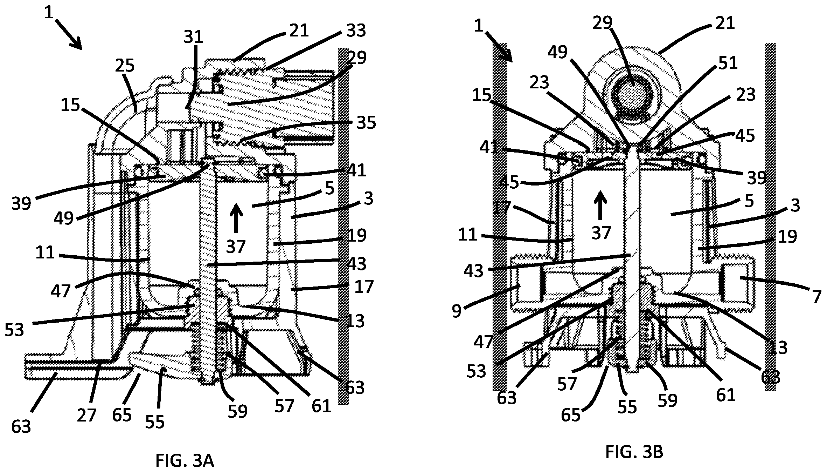

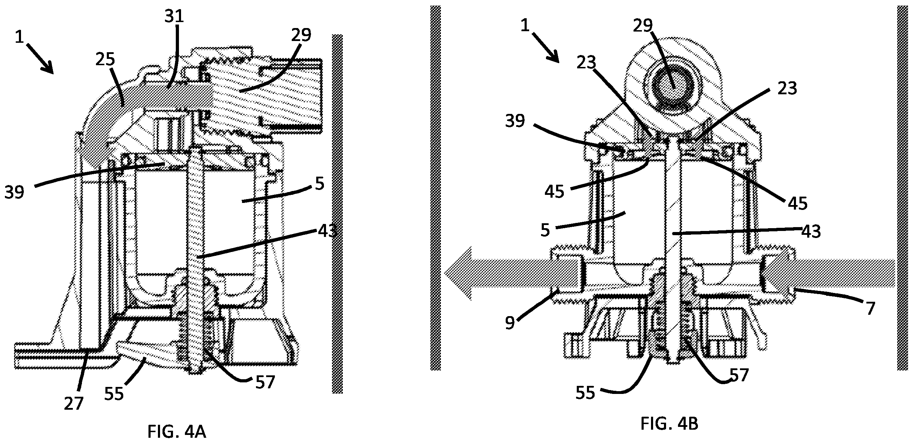

Figures 3A, 3B, 4A and 4B show the operation of the actuator 1 with the solenoid valve 29 open, and the piston head 39 at its highest positon in the chamber 5. Here, the arm 55 is fully retracted. Figures 4A and 4B show the flow of water through the actuator 1, by the shaded arrows.

Whilst the solenoid valve 29 remains open, the net force on the piston head 39 is still pushing the piston head 39 up, so the piston head 39 is kept at the top of the chamber 39. Once the solenoid valve 29 is closed, water can no longer escape through the fluid passage 25. The water passing through the through holes 45 generates a pressure (and hence a force) on the top of the piston head 39. This force, in combination with the spring 55, is greater than the force underneath the piston head 39, resulting in a net downward force, causing the piston head 39 to move down until it reaches the seat 47.

As the arm 55 moves up from the fully extended position after the solenoid valve 29 is opened, it engages and opens the flush valve, allowing water to pass from the tank or cistern into the toilet bowl.

The arm 55 may engage and disengage the flush valve at any point between fully extended and fully retracted. For example, the arm 55 may engage the flush valve shortly after the full extended position, or only once it is close to the fully retracted position, or only once it is at the fully retracted position.

The flush valve may be closed by any suitable mechanism. For example, the flush valve may include an automatic closing mechanism. In other examples, the arm 55 may also close the flush valve when it disengages the valve, or as it moves to the fully extended position from the fully retracted position. In this case, the solenoid valve 29 should be kept open sufficiently long to complete the flush.

The actuator 1 may be made of any suitable material. For example, the housing, including the unitary piece 19, outer housing 17 and cap 21, the arm 55 and the piston head 39 may be moulded plastics, while the rod 43 and spring 57 may be metal. Other materials may also be used for different parts.

It will be appreciated that the example discussed above and shown in the Figures is given by way of example only.

The inlet 7 and outlet 9 should be sized for connection to standard sized pipes and/or valves. However, the housing 3, chamber 5, piston head 39 and arm 55 may be any suitable shape and size, and any suitable construction may be used.

Furthermore, the solenoid valve 29 is only one type of valve that may be used. Any other suitable type of valve may be used. The valve 29 may be electronically operated, such as the solenoid valve, or mechanical.

In the example discussed above, the piston head 39 forms a water tight seal with the side wall 11 of the chamber 5, and water is passed to the space above the piston head 39 via through holes 45 in the piston head 39. However, it will be appreciated that other pathways may be used to provide water from the inlet 7 to the top side of the piston head 39 instead of or as well as the through holes.

For example, the piston head 39 may not form a completely water tight fit to the side walls 11, so that some water passes between the piston head 39 and side wall 11. A separate passageway (not shown) may also be formed in the housing, from the inlet 7 or the area below the piston head 39, to the area above the piston head 39.

Whichever one or combination of pathways are used to provide water to the area above the piston head 39, the pathways should be arranged so that the flow of water through these pathways is less than the flow of water out of the passageway 25, to the second outlet 27.

Any suitable outlet 27 to atmosphere may be used as an outlet from the top end of the chamber 5. It will be appreciated that the use of the fluid passage 25 is optional, and any outlet 27 closable by the solenoid valve 29 may be provided directly from the chamber 5.

The outlet 9 at the bottom of the chamber 5 is also optional and may be omitted. In this case, a separate fill valve (not shown) is used for the toilet. The outlet 9 may be closed by a blanking cap or the like. Alternatively, the actuator 1 may be constructed without the outlet from the bottom of the chamber 5.

The arrangement of the spring 57 is also by way of example only. The spring 57 may be arranged in any suitable manner. For example, the spring may be in the chamber 5, between the piston head 39 and a spring seat in the cap, or any other position. Alternatively, any suitable mechanism for resiliently biasing the arm to the fully extended position may be used.

In yet further examples, the arm 55 may not be resiliently biased. Instead, the force of the water above and below the piston head 39, and the alteration of the force as the solenoid valve 29 opens and closes, may be used to move the piston head 39.

In the above examples, the piston head 39 moves from a position on the seat 47 to the top of the chamber 5. It will be appreciated that the seat 47 may be any suitable height, so that the volume under the piston head 39 when the arm 55 is fully extended may be any suitable volume. Furthermore, it will be appreciated that the piston head 39 may not necessary move to the top of the chamber 5 to fully retract the arm 55.

Instead, a seat may be formed at the top of the chamber 5. In addition, or alternatively, the connecting rod 43 and/or spring 57 may be arranged to limit how far up the chamber 5 the piston head 39 moves.

In the above example, the arm 55 moves between a fully retracted position and a fully extended position. It will be appreciated that the fully extended position is simply the position where the arm 55 is as far away from the chamber 5 as it can reach, and the fully retracted position is when the arm 55 is as close to the chamber 5 as it can reach. In some examples, the arm 55 may not be fully received in the cavity 65, even when fully retracted.

In the above, the piston head 39 is moved to or held at the bottom of the chamber 5 when the solenoid valve 29 is closed, and moved to or held at the top of the chamber 5 when the solenoid valve 29 is open. It will be appreciated that this may be reversed. Similarly, instead of the flush valve being opened when the arm 55 moves from fully extended to full retracted, the flush valve may be opened when the arm 55 moves in the opposite direction.

In the above example, the solenoid valve 29 is connected to the control by a plug 67. However, it will be appreciated that any suitable connector may be used, or the valve 29 may be wired directly to the control.

In the above example, the inlet 7 of the actuator 1 is connected to an inlet of a toilet cistern or tank, and the outlet 9 of the actuator 1 is connected to a fill valve. However, it will be appreciated that the fill valve may be connected to the inlet 7 of the actuator instead, such that the outlet 9 of the actuator forms the outlet of the fill valve. In this example, the underside of the piston head 39 will be under higher pressures whilst the tank or cistern is being filled, and lower pressure when it is not.

It will also be appreciated that inlet 7 and outlet 9 are interchangeable. Both the inlet 7 and outlet 9 are simply apertures into the chamber 5. In use, either aperture could form the inlet 7 and the outlet 9.

Alternatively, the actuator may not be directly connected to the inlet or fill valve, and may simply sit in the cistern or tank.

In the above example, the arm 55 directly opens the flush valve. It will be appreciated, that the use of the arm 55 is by way of example only. The actuator 1 may use any suitable mechanism by which to engage and open the flush valve. Furthermore, any suitable member may be used to operate the flush valve, instead of an arm 55.

## Claims

1. An actuator (1) for a flush valve, the actuator (1) including: a housing (3) defining a chamber (5); a piston (37) having a head (39) received in the chamber (5) and a connecting rod (43) extending from the piston head (39), the piston head (39) arranged to move within the chamber (5), between a first position and a second position, and the connecting rod (43) configured to actuate a flush mechanism of the flush valve as the piston head (39) moves between the first position and the second position; an inlet (7) for providing water under pressure into the chamber (5) to a first side of the piston head (39); an outlet from the chamber (5) from a second side of the piston head (39), opposite the first side; and a valve (29) for opening and closing the outlet, wherein opening and closing the valve (29) alters the pressure applied to the second side of the piston head (39), such that, in use, the piston head (39) moves when the valve (29) is opened or closed, wherein the valve (29) is a solenoid valve.

2. The actuator (1) of claim 1, wherein the connecting rod (43) is configured to open the flush valve when the piston (37) is at and/or moving to the second position.

3. The actuator (1) of claim 2 wherein, when the piston (37) is in the first position, the piston head (39) is at or near a first end of the chamber (5), and when the piston (37) is in the second position, the piston head (39) is at or near a second end of the chamber (5).

4. The actuator (1) of claim 3 wherein the inlet (7) is arranged at or near the first end, and the outlet is arranged at or near the second end.

5. The actuator (1) of any preceding claim further including means for feeding water from the first side of the piston head (39) to second side of the piston head (39).

6. The actuator (1) of claim 5 wherein, opening the valve (29) causes water to drain from the second side of the piston head (39).

7. The actuator (1) of claim 6 wherein the outlet is arranged to drain water from the second side of the piston head (39) faster than water is provided by the water feeding means.

8. The actuator (1) of any of claims 5 to 7 wherein the water feeding means comprises passages (45) in the piston head (39).

9. The actuator (1) of any preceding claim further including a spring (57) arranged to resiliently bias the piston (37) to the first position, wherein the spring (57) is arranged around the connecting rod (43).

10. The actuator (1) of claim 9 wherein the spring (57) rests against a seat (61) formed in the housing (3), and is provided inside or outside the chamber (5).

11. The actuator (1) of any preceding claim wherein the connecting rod (43) extends from the piston head (39), through the housing (3) and outside the chamber (5).

12. The actuator (1) of any preceding claim further including a second outlet (9) from the chamber (5), arranged to provide water under pressure from the first side of the piston head (39).

13. A cistern or a tank for a toilet, comprising an actuator (1) according to any of claims 1 to 12 arranged to actuate a flush valve of the toilet wherein the housing (3) is received in the cistern or the tank.

14. The actuator (1) of any of claims 1 to 12, further comprising electric means for operating the valve (29), the electric means including a control, and a connection between the control and the valve (29), optionally wherein, at least part of the connection is received in a cistern or tank of a toilet, and is arranged to be waterproof.

15. The actuator (1) of any of claims 1 to 12 and 14, having one or more of the following features:
wherein the actuator (1) is configured such that the first side of the piston head (39) is under substantially the same pressure when the valve (29) is open and when the valve (29) is closed; and/or
wherein the chamber (5) includes a seat (47) for the piston head (39), such that, in use, there is a volume of water on the first side of the piston head (39) when the piston (37) is in both the first position and the second position; and/or
wherein, in use, when the valve (29) is open, the force acting on the piston head (39) towards the first position is a first force, lower than the force acting on the piston head (39) towards the second position, resulting in the piston (37) moving to or being held at the second position; and/or
wherein, in use, when the valve (29) is closed, the force acting on the second side of the piston head (39) is a second force, higher than the force acting on the piston head (39) towards the second position, resulting in the piston head (39) moving to or being held at the first position; and/or
wherein the valve (29) is operated by a push button.

## Patentansprüche

1. Stellantrieb (1) für ein Spülventil, der Stellantrieb (1) beinhaltend: ein Gehäuse (3), das eine Kammer (5) definiert; einen Kolben (37) mit einem Kopf (39), der in der Kammer (5) aufgenommen ist, und einer Verbindungsstange (43), die sich von dem Kolbenkopf (39) erstreckt, wobei der Kolbenkopf (39) angeordnet ist, sich in der Kammer (5) zwischen einer ersten Position und einer zweiten Position zu bewegen, und die Verbindungsstange (43) gestaltet ist, einen Spülmechanismus des Spülventils zu betätigen, wenn sich der Kolbenkopf (39) zwischen der ersten Position und der zweiten Position bewegt; einen Einlass (7) zum Bereitstellen von Wasser unter Druck in die Kammer (5) zu einer ersten Seite des Kolbenkopfs (39); einen Auslass aus der Kammer (5) von einer zweiten Seite des Kolbenkopfs (39), die der ersten Seite gegenüberliegt; und ein Ventil (29) zum Öffnen und Schließen des Auslasses, wobei Öffnen und Schließen des Ventils (29) den Druck verändert, der auf die zweite Seite des Kolbenkopfs (39) ausgeübt wird, sodass sich der Kolbenkopf (39) in Verwendung bewegt, wenn das Ventil (29) geöffnet oder geschlossen wird, wobei das Ventil (29) ein elektromagnetisches Ventil ist.

2. Stellantrieb (1) nach Anspruch 1, wobei die Verbindungsstange (43) gestaltet ist, das Spülventil zu öffnen, wenn sich der Kolben (37) an der zweiten Position befindet oder sich zu dieser bewegt.

3. Stellantrieb (1) nach Anspruch 2, wobei, wenn der Kolben (37) in der ersten Position ist, der Kolbenkopf (39) sich bei oder nahe bei einem ersten Ende der Kammer (5) befindet, und wenn der Kolben (37) in der zweiten Position ist, der Kolbenkopf (39) sich bei oder nahe bei einem zweiten Ende der Kammer (5) befindet.

4. Stellantrieb (1) nach Anspruch 3, wobei der Einlass (7) bei oder nahe bei dem ersten Ende angeordnet ist und der Auslass bei oder nahe bei dem zweiten Ende angeordnet ist.

5. Stellantrieb (1) nach einem vorstehenden Anspruch, weiter beinhaltend Mittel zum Zuleiten von Wasser von der ersten Seite des Kolbenkopfs (39) zu der zweiten Seite des Kolbenkopfs (39).

6. Stellantrieb (1) nach Anspruch 5, wobei Öffnen des Ventils (29) bewirkt, dass Wasser von der zweiten Seite des Kolbenkopfs (39) abgeleitet wird.

7. Stellantrieb (1) nach Anspruch 6, wobei der Auslass angeordnet ist, Wasser von der zweiten Seite des Kolbenkopfs (39) schneller abzuleiten als Wasser durch das Wasserzuleitungsmittel bereitgestellt wird.

8. Stellantrieb (1) nach einem der Ansprüche 5 bis 7, wobei das Wasserzuleitungsmittel Durchlässe (45) in dem Kolbenkopf (39) umfasst.

9. Stellantrieb (1) nach einem vorstehenden Anspruch, weiter beinhaltend eine Feder (57), die angeordnet ist, den Kolben (37) elastisch zu der ersten Position vorzuspannen, wobei die Feder (57) um die Verbindungsstange (43) angeordnet ist.

10. Stellantrieb (1) nach Anspruch 9, wobei die Feder (57) gegen einen Sitz (61) liegt, der in dem Gehäuse (3) gebildet ist und innerhalb oder außerhalb der Kammer (5) bereitgestellt ist.

11. Stellantrieb (1) nach einem vorstehenden Anspruch, wobei sich die Verbindungsstange (43) von dem Kolbenkopf (39) durch das Gehäuse (3) und zur Außenseite der Kammer (5) erstreckt.

12. Stellantrieb (1) nach einem vorstehenden Anspruch, weiter beinhaltend einen zweiten Auslass (9) aus der Kammer (5), der angeordnet ist, Wasser unter Druck von der ersten Seite des Kolbenkopfs (39) bereitzustellen.

13. Spülkasten oder Tank für eine Toilette, umfassend einen Stellantrieb (1) nach einem der Ansprüche 1 bis 12, der angeordnet ist, ein Spülventil der Toilette zu betätigen, wobei das Gehäuse (3) in dem Spülkasten oder dem Tank aufgenommen ist.

14. Stellantrieb (1) nach einem der Ansprüche 1 bis 12, weiter umfassend elektrische Mittel zum Betätigen des Ventils (29), wobei die elektrischen Mittel eine Steuerung und eine Verbindung zwischen der Steuerung und dem Ventil (29) beinhalten, wobei optional mindestens Teil der Verbindung in einem Spülkasten oder Tank einer Toilette aufgenommen ist, und angeordnet ist, wasserfest zu sein.

15. Stellantrieb (1) nach einem der Ansprüche 1 bis 12 und 14 mit einem oder mehreren der folgenden Merkmale:
wobei der Stellantrieb (1) so gestaltet ist, dass die erste Seite des Kolbenkopfs (39) im Wesentlichen unter demselben Druck steht, wenn das Ventil (29) offen ist und wenn das Ventil (29) geschlossen ist; und/oder
wobei die Kammer (5) einen Sitz (47) für den Kolbenkopf (39) beinhaltet, sodass, in Verwendung, ein Volumen von Wasser an der ersten Seite des Kolbenkopfs (39) ist, wenn sich der Kolben (37) sowohl in der ersten Position als auch der zweiten Position befindet; und/oder
wobei in Verwendung, wenn das Ventil (29) offen ist, die Kraft, die auf den Kolbenkopf (39) zu der ersten Position wirkt, eine erste Kraft ist, die niedriger als die Kraft ist, die auf den Kolbenkopf (39) zu der zweiten Position wirkt, was dazu führt, dass sich der Kolben (37) zu der zweiten Position bewegt oder dort gehalten wird; und/oder
wobei in Verwendung, wenn das Ventil (29) geschlossen ist, die Kraft, die auf die zweite Seite des Kolbenkopfs (39) wirkt, eine zweite Kraft ist, die höher als die Kraft ist, die auf den Kolbenkopf (39) zu der zweiten Position wirkt, was dazu führt, dass sich der Kolbenkopf (39) zu der ersten Position bewegt oder dort gehalten wird; und/oder
wobei das Ventil (29) durch einen Drucktaster betätigt wird.

## Revendications

1. Actionneur (1) pour une vanne de chasse d'eau, l'actionneur (1) incluant: un logement (3) définissant une chambre (5) ; un piston (37) ayant une tête (39) reçue dans la chambre (5) et une bielle (43) s'étendant à partir de la tête de piston (39), la tête de piston (39) étant agencée pour se déplacer à l'intérieur de la chambre (5), entre une première position et une seconde position, et la bielle (43) étant configurée pour actionner un mécanisme de chasse d'eau de la vanne de chasse d'eau lorsque la tête de piston (39) se déplace entre la première position et la seconde position ; une entrée (7) pour fournir de l'eau sous pression dans la chambre (5) à un premier côté de la tête de piston (39) ; une sortie de la chambre (5) depuis un second côté de la tête de piston (39), opposé au premier côté ; et une vanne (29) pour l'ouverture et la fermeture de la sortie, dans lequel l'ouverture et la fermeture de la vanne (29) modifient la pression appliquée sur le second côté de la tête de piston (39), de telle sorte que, durant l'utilisation, la tête de piston (39) se déplace lorsque la vanne (29) est ouverte ou fermée, dans lequel la vanne (29) est une vanne à solénoïde.

2. Actionneur (1) selon la revendication 1, dans lequel la bielle (43) est configurée pour ouvrir la vanne de chasse d'eau lorsque le piston (37) est à et/ou se déplace jusqu'à la seconde position.

3. Actionneur (1) selon la revendication 2 dans lequel, lorsque le piston (37) est dans la première position, la tête de piston (39) est à une première extrémité, ou près de celle-ci, de la chambre (5), et, lorsque le piston (37) est dans la seconde position, la tête de piston (39) est à une seconde extrémité, ou près de celle-ci, de la chambre (5).

4. Actionneur (1) selon la revendication 3, dans lequel l'entrée (7) est agencée à la première extrémité ou près de celle-ci, et la sortie est agencée à la seconde extrémité, ou près de celle-ci.

5. Actionneur (1) selon une quelconque revendication précédente, incluant en outre des moyens pour fournir de l'eau depuis le premier côté de la tête de piston (39) au second côté de la tête de piston (39).

6. Actionneur (1) selon la revendication 5, dans lequel l'ouverture la vanne (29) fait en sorte que de l'eau soit drainée à partir du second côté de la tête de piston (39).

7. Actionneur (1) selon la revendication 6, dans lequel la sortie est agencée pour drainer de l'eau à partir du second côté de la tête de piston (39) plus rapidement que de l'eau est fournie par les moyens de fourniture d'eau.

8. Actionneur (1) selon l'une quelconque des revendications 5 à 7, dans lequel les moyens de fourniture d'eau comprennent des passages (45) dans la tête de piston (39).

9. Actionneur (1) selon une quelconque revendication précédente, incluant en outre un ressort (57) agencé pour solliciter de façon résiliente le piston (37) jusqu'à la première position, dans lequel le ressort (57) est agencé autour de la bielle (43).

10. Actionneur (1) selon la revendication 9, dans lequel le ressort (57) repose contre un siège (61) formé dans le logement (3), et est prévu à l'intérieur ou à l'extérieur de la chambre (5).

11. Actionneur (1) selon une quelconque revendication précédente, dans lequel la bielle (43) s'étend à partir de la tête de piston (39), à travers le logement (3) et à l'extérieur de la chambre (5).

12. Actionneur (1) selon une quelconque revendication précédente, incluant en outre une seconde sortie (9) de la chambre (5), agencée pour fournir de l'eau sous pression à partir du premier côté de la tête de piston (39).

13. Citerne ou réservoir pour des toilettes, comprenant un actionneur (1) selon une quelconque des revendications 1 à 12 agencé pour actionner une vanne de chasse d'eau des toilettes dans lequel le logement (3) est reçu dans la citerne ou le réservoir.

14. Actionneur (1) selon l'une quelconque des revendications 1 à 12,
comprenant en outre des moyens électriques pour mettre en fonctionnement la vanne (29), les moyens électriques incluant une commande, et une connexion entre la commande et la vanne (29), optionnellement dans lequel, au moins une partie de la connexion est reçue dans une citerne ou un réservoir de toilettes, et est agencée pour être étanche à l'eau.

15. Actionneur (1) selon l'une quelconque des revendications 1 à 12 et 14, ayant une ou plusieurs des caractéristiques suivantes :
dans lequel l'actionneur (1) est configuré de telle sorte que le premier côté de la tête de piston (39) soit sensiblement sous la même pression lorsque la vanne (29) est ouverte et lorsque la vanne (29) est fermée ; et/ou
dans lequel la chambre (5) inclut un siège (47) pour la tête de piston (39), de telle sorte que, durant l'utilisation, il y ait un volume d'eau sur le premier côté de la tête de piston (39) lorsque le piston (37) est à la fois dans la première position et dans la seconde position ; et/ou
dans lequel, durant l'utilisation, lorsque la vanne (29) est ouverte, la force agissant sur la tête de piston (39) vers la première position est une première force, inférieure à la force agissant sur la tête de piston (39) vers la seconde position, ayant pour résultat le fait que le piston (37) se déplace jusqu'à ou est maintenu à la seconde position ; et/ou
dans lequel, durant l'utilisation, lorsque la vanne (29) est fermée, la force agissant sur le second côté de la tête de piston (39) est une seconde force, supérieure à la force agissant sur la tête de piston (39) vers la seconde position, ayant pour résultat le fait que la tête de piston (39) se déplace jusqu'à ou est maintenue à la première position ; et/ou
dans lequel la vanne (29) est mise en fonctionnement par un bouton-poussoir.
